# EUROPEAN PATENT SPECIFICATION

(11) **EP 3 840 998 B1**
(45) Date of publication and mention of the grant of the patent: **22.03.2023**
(21) Application number: 19748835.6
(22) Date of filing: 07.08.2019
(51) Int. Cl.: E21D 11/20, E01B 2/00, F16L 9/18

(54) **TUBE SEGMENT FOR EVACUATED TUBE TRANSPORT SYSTEM**
DOPPELWANDIGER ROHRABSCHNITT ZUM AUFBAU EINES ROHRSEGMENTS
SECTION DE TUBE À DOUBLE PAROI POUR CONSTRUIRE UN SEGMENT DE TUBE

(30) Priority: 24.08.2018 EP 18190836
(43) Date of publication of application: 30.06.2021
(73) Proprietor: Tata Steel Nederland Technology B.V., 1951 JZ Velsen-Noord (NL)
(72) Inventor: WYMAN, Neal, Christopher, 1970 CA IJMUIDEN (NL)
(74) Representative: Group Intellectual Property Services
(86) International application number: PCT/EP2019/071243
(87) International publication number: WO 2020/038721

(56) References cited:
- EP-A1- 0 127 248
- WO-A1-2017/196978
- DE-U1- 29 719 566
- GB-A- 1 207 563
- US-A- 4 674 542
- US-A- 4 881 469

## Description

### Field of the invention

This invention relates to a double-walled tube section for constructing a tube segment suitable for underpressure application and a method for producing such a double-walled tube section, and to a tube segment produced thereby.

### Background of the invention

With underpressure application is meant that the pressure in the tube segment is lower than outside the tube segment. The tube segment is therefore under external pressure. One such underpressure application is a tube in an evacuated tube transport system (ETT). A hyperloop is a proposed mode of ETT for passenger and/or freight transportation, first used to describe an open-source vactrain design released by a joint team from Tesla and SpaceX. Drawing heavily from Robert Goddard's vactrain, a hyperloop comprises a sealed vacuum tube or system of vacuum tubes through which a pod may travel free of air resistance or friction conveying people or objects at high speed and acceleration. Elon Musk's version of the concept, first publicly mentioned in 2012, incorporates reduced-pressure tubes in which pressurized capsules ride on air bearings driven by linear induction motors and air compressors. The tubes would run above ground on pylons or below ground in tunnels. The concept would allow travel which is considerably faster than current rail or air travel. An ideal hyperloop system will be more energyefficient, quiet, and autonomous than existing modes of mass transit.

Developments in high-speed rail have historically been impeded by the difficulties in managing friction and air resistance, both of which become substantial when vehicles approach high speeds. US4881469 discloses a system for operating high speed trains in tunnels. A ventilation system is provided which enables trains to be additionally accelerated by producing a longitudinal flow of the tunnel air in the travel direction, so that the trains can be additionally accelerated like in a pneumatic mail system, or to reduce the pressure before and/or increase the pressure behind a running train.

The vactrain concept theoretically eliminates these obstacles by employing magnetically levitating trains in evacuated (airless) or partly evacuated tubes, allowing for very high speeds. The principle of magnetic levitation is disclosed in US1020942. However, the high cost of magnetic levitation and the difficulty of maintaining a vacuum over large distances has prevented this type of system from ever being built. The Hyperloop resembles a vactrain system but operates at approximately one millibar (100 Pa) of pressure and can therefore be described as an evacuated tube transport (ETT) system as disclosed in general terms in US5950543.

An ETT system solves many problems associated with classic transport by moving all obstacles from the path of travel. The object traveling (in this case a capsule) is in a tube so it stays on the intended path and no obstacles can get on the path. If subsequent capsules undergo identical acceleration and deceleration, many capsules can travel the same direction in the tube at once with complete safety. Acceleration and deceleration are planned to prevent the capsule from becoming an obstacle to subsequent capsules. The reliability of the capsules is very high due to minimal or no reliance on moving parts. Most of the energy required to accelerate is recovered during deceleration.

One of the important elements of an ETT-system is the tube. These tubes require a large internal diameter for allowing the pods containing the freight or passengers to pass through. The pressure in the tube is about 100 Pa, so it must be able to withstand the pressure from the surrounding atmosphere of about 101 kPa which is about 1000 times higher. As the tubes above ground would often be supported (e.g. by pylons) the tube must also be able to span the gap between two supports without bending or buckling. According to the full proposal of the Hyperloop Alpha project a tube wall thickness between 20 to 23 mm is necessary to provide sufficient strength for the load cases considered such as pressure differential, bending and buckling between pylons, positioned about 30 m apart, loading due to the capsule weight and acceleration, as well as seismic considerations for a passenger tube. For a passenger plus vehicle tube the tube wall thickness for the larger tube would be between 23 to 25 mm. These calculations are based on a tube having an internal diameter of 3.30 m. However, calculations have also shown that the economics of the ETT-system can be much improved by increasing the pod size travelling through the tube. These increased pod sizes require an internal diameter in the order of 3.50 to 5.00 meter. If these diameters of tube are produced from steel plate or strip, then this requires a thickness in the order of 30 mm. No hot strip mill is able to supply material of this thickness, and therefore these tubes would have to be produced from plate. With the proposed wide spread use of the ETT system and steel as the preferred material for the tube, this would require approx. 3000 ton/km x 20000 km = 60 Mton. Currently the total production of plate in EU28 is about 10 Mton/year. Apart from this capacity problem it is clear that producing tubes from plate requires an enormous amount of cumbersome handling and shaping on-site and welding of the plate, as well as that the tubes become very heavy. A 5 m diameter tube of 30 mm thick steel weighs 3700 kg/m, meaning that segments of 10 m weigh 37 tonnes. The payload of a Mi-26 helicopter is about 22 tonnes. Transport via the road is impractical in view of viaducts or other restrictions.

Buckling refers to the loss of stability of a structure and in its simplest form, is independent of the material strength where it is assumed that this loss of stability occurs within the elastic range of the material. Slender or thin-walled structures under compressive loading are susceptible to buckling. So the tube must not only be able to withstand the pressure difference, and be able to span 30 m without significant sagging, it must also have sufficient buckling resistance. Using higher strength steels may increase the mechanical properties, and thereby lead to some material saving by allowing a thinner wall thickness, but not the buckling resistance.

US4881469 discloses an operating system for high speed tunnel trains. This document also discloses cross sections of tubes for a one-directional tunnel system for a high speed train operating under atmospheric pressure.

### Objectives of the invention

It is the object of the invention to provide a tube section for constructing a tube for underpressure or near vacuum applications that is lighter than a conventionally produced spiral-welded tube, which is not susceptible to buckling.

It is a further object of the invention to provide a tube section for constructing a tube for underpressure applications that can be produced on-site.

It is a further object of the invention to provide a tube section for constructing a tube for an ETT-system that can be transported over the road easily.

It is a further object of the invention to provide a tube suitable for an ETT-system which uses less material than a single skin tube while providing similar buckling performance with acceptable stiffness in a fashion that is conventionally manufacturable from hot-or cold-rolled strip steel.

### Description of the invention

One or more of these objects is reached with a double-walled tube section (dwts) according to claim 1. Preferable embodiments are provided in the dependent claims.

According to the invention the double-walled tube section (2) for constructing a double-walled tube segment (1) suitable for underpressure applications comprises an elongated curved outer shell part (3) forming the outer wall of the double-walled tube segment and a plurality of inner shell parts (4), wherein the elongated curved outer shell part comprises a curved central portion (3a) and a folded portion (3d) at least one of the long edges (3b, 3c) wherein the folded portion forms a flange folded towards the centrepoint M of the curvature, wherein each inner shell part comprises a flat central portion (4a) and a folded portion (4d) folded away from the centrepoint of the curvature at at least one of the long edges (4b, 4c), the folded portion having a curved edge (4e) to match the curvature of the elongated curved outer shell part, wherein the plurality of inner shell parts are joined together along their long edges (4b, 4c), and wherein the plurality of inner shell parts are joined to the inner surface of the elongated curved outer shell part along the curved edge (4e) of the folded edge portion (4d).

If the underpressure application or near vacuum application is an evacuated tube transport system tube, then the internal atmosphere in the tube is, in use, near vacuum. In the context of this invention wherein the pressure outside the tube is the atmospheric pressure of about 101 kPa (1 bar), near vacuum means that the pressure inside the tube is less than 10 kPa (-0.1 bar), preferably less than 1 kPa (-0.01 bar or 10 mbar), even more preferably less than 500 Pa (≈5 mbar) or even 200 Pa (≈2 mbar), or even about 100 Pa (≈1 mbar).

The dwts according to the invention is a building block for a radially segmented tube segment. The radially segmented tube offers a rolled strip steel solution. It is a concept which is capable of producing small and large diameter tubes (from the smallest Hyperloop Alpha tube size 2.23m internal diameter equivalent and larger). This design uses less material than the equivalent single gauge walled tube whilst achieving the same external pressure buckling performance with acceptable vertical stiffness between supporting pylons and has other benefits. Preferably the incircle of the tube segment, and thus the tube produced with the tube segments, is at least 2 m, more preferably at least 3 m, even more preferably at least 4 m or even 5 m.

The dwts is manufactured with a twin wall configuration. The elongated outer skin panel (eosp) provides the airtightness to maintain the very low pressures inside the tube. The inner skin panels (isp) provide support to the outer skin to help resist global buckling. The tube segment is constructed by positioning a number of dwts radially. This allows individual segments to be made before assembling into a complete tube. The structure which separates the 2 skins is created by folding the components making up the skins. In an embodiment it is possible to produce the dwts by using the eosp according to the invention and a flat isp (optionally with reinforcements against buckling) without flanges and insert pieces that act as the connection between the curved surface of the eosp and the flat isp, wherein the insert pieces provide the annular rib in the tube segment produced from the dwts's. This embodiment is less attractive because much more welding is required: the insert pieces have to be welded to the eosp and to the isp. In the embodiment wherein the flange of the isp acts as the connection between the curved surface of the eosp and the flat central portion of the isp there is one less weld to be made.

In an embodiment the curved portion of the elongated curved outer shell part are provided with protruding or intruding reinforcements against buckling. Patterns embossed on the skins help to increase the local panel buckling performance between the separating structure.

In an embodiment the protruding reinforcements against buckling comprise one or more longitudinal dimples (5) parallel to the long edges (4b, 4c) in the inner shell part 4.

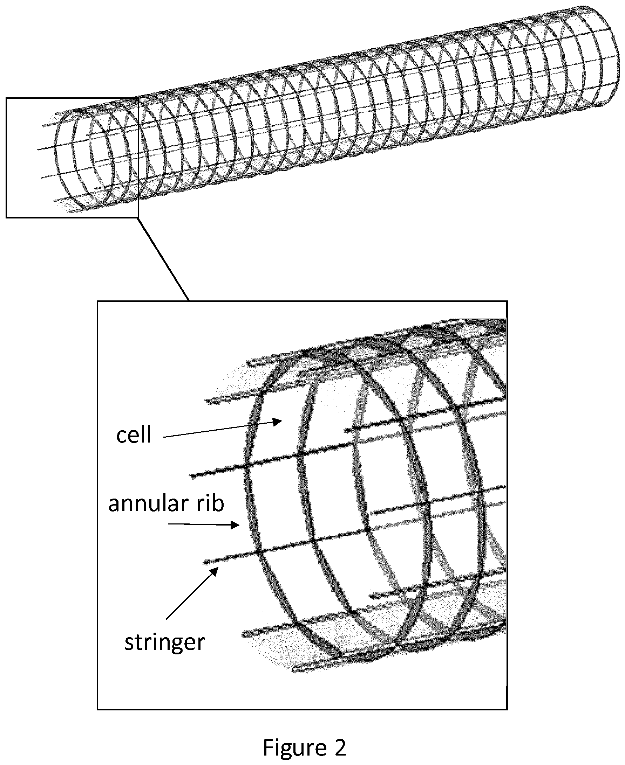

The dwts consist of a single elongated outer skin panel (eosp) and multiple inner skin panels (isp) separated by flanges. There are axial flanges running the length of the tube segment known as stringers (or longitudinal ribs) which are generated by folding 1 edge of the outer skin inwards (as seen in the final tube). The inner skin is made up of multiple panels. These panels have an edge orthogonal to the axis turned outward (as seen in the final tube) to form part of an annulus (completed when all the segments are joined) known as a rib or annular rib. These inner panels join together along the length of the outer skin to form an inner skin, completing a dwts. To be able to fold the ribs, the inner panel needs to be relatively flat. The ribs and stringers form the skeleton of the tube segment (see figure 2). The eosp has a length L and a width w. Preferably L>5w, more preferably L>10w and even more preferable L>15 w. The curvature of the eosp is in the width direction, because the curvature will be part of the circumference of the tube. Assuming for example that 10 dwts's will form a cylindrical tube, each dtws covers 360/10 = 36° of the circumference of the tube. The eosp is preferably straight in the length direction.

In an embodiment the angle between the flat central portion (4a) and the folded edge portion (4d) of the inner shell part is between 85 and 95°, preferably 90° (orthogonal).

It is the outer skin that is airtight and with the assistance of the inner skin, resists the external pressure. The performance increase of the lighter gauges is predominantly achieved by the additional out of plane stiffness of the external skin. The buckling can manifest itself in multiple ways with global modes seeing the collapse of the whole tube and local modes showing failure between the stiffening rib and stringer structures. This twin wall structure in combination with the ribs act to resist the global buckling modes. Intruding or protruding reinforcements in the outer (and inner) skin normal to the skin surface between the ribs and stringer connections (i.e. in the cells (see figure 2)) resist local buckling modes.

In an embodiment each inner shell part is also joined along at least one of its short edges (4f, 4g) to the edge of the at least one folded portion (3d) of the elongated curved outer shell part, and preferably also along the short side edges of 4d.

Preferably the edge (4b) overlaps edge (4c) of the adjoining inner shell part, and these edges are joined.

In an embodiment the double-walled tube section (2) according to the invention comprises elongated curved outer shell parts provided with a folded portion (3d, 3e) at both of the long edges (3b, 3c) wherein the folded portions forms flanges folded towards the centrepoint M of the curvature, and wherein each inner shell part is also joined along both of its short edges (4f, 4g) to the edge of the folded portions (3d, 3e) of the elongated curved outer shell part.

In an embodiment the double-walled and airtight tube segment (1) consists of a plurality of double-walled tube sections (2) according to the invention wherein the double-walled tube sections are airtightly joined along the long edges (3b, 3c) to form a tube segment wherein the folded edges of the inner shell part in adjoining double-walled tube sections (2) are aligned so as to form a plurality of ribs around the internal circumference of the tube segment distanced apart, and wherein the folded portions of the elongated curved outer shell part form longitudinal rims ("stingers"). Preferably the edges (4g) of the double-walled tube segment are joined to the edges 4f of the adjoining double-walled tube section. Preferably the incircle of the double-walled and airtight tube segment is at least 3 m in diameter.

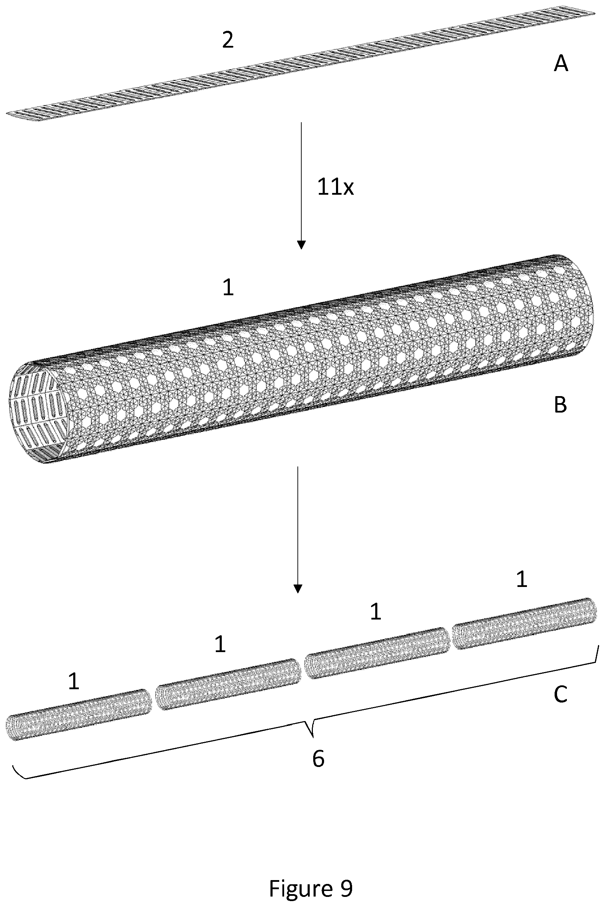

It should be noted that the double-walled and airtight tube segment is intended to be airtight in the radial direction, i.e. once a plurality of double-walled and airtight tube segment are airtightly coupled to form a long tube for an ETT-system no air can ingress into the tube from outside the tube. So in figure 9, the long edges of the 11 dwts (2) are airtightly connected to each other and the double-walled and the 4 thusly constructed airtight tube segments (1) are a airtightly connected to each other as well to form (part of) a tube (6) for an underpressure application.

A tube 6 for an underpressure application is divided into tube segments 1 of a manageable size. The tube segment is fixedly connected to other tube segments to form the tube. The connection between the tube segments must be airtight so as to allow a low pressure to exist in the tube. This airtightness may be provided by the connection itself, i.e. as a result of welding, or by some compound between the tube segments, such as an elastomer, when the tube segments are bolted or clamped together, or by means of an expansion joint to deal with thermal expansion of the tube segments. In figure 9C the connections between the tube segments 1 is not shown.

The length of a tube segment is not fixed. Typically the length is between 10 and 50 m. The Hyperloop concept study assumes length of 30 m to be feasible. Such a length can be transported through air, train or on a lorry. For ETT applications the diameter of the inscribed circle in the tube segment is preferably least 3 m. A suitable upper boundary for this diameter is 5 m, although this is not a limitation per se. If the tube segment is strong and stiff enough, diameters of larger than 5 m are conceivable without deviating from the gist of the invention as claimed. Also, the tube is not necessarily circular in cross sections. The tube may also be oval, or any other suitable shape. The advantage of a circular tube is that the dwts can be substantially identical so that a degree of standardisation is reached.

A single walled tube (segment) without any reinforcements against buckling needs to be constructed from thick flat material, e.g. spiral-welded steel strip. For a 4 m diameter tube the thickness of the strip of E420 HSLA steel is already 15 mm for a safety factor of 1. A safety factor of 2 increases the thickness to 20 mm. This thickness is in the upper range of the hot-strip mills capability. Also, a 15 mm tube segment of 30 m in length and of 4 m in diameter already weighs 45 tonnes.

A large weight reduction is achieved by the tube segment according to the invention. The combination of an elongated outer shell part and flat inner shell parts, optionally with intruding or protruding reinforcements (aka imprints or dimples) against buckling with the ribs and stringers provided by the flanges of the eosp's and isp's result in a high buckling resistance but with a much lower weight. Compared to the flat spiral welded strip the same buckling strength can be obtained with the dwts according to the invention wherein the tube segment according to the invention would be 3.4 times as light as the equivalent tube segment from flat spiral welded strip.

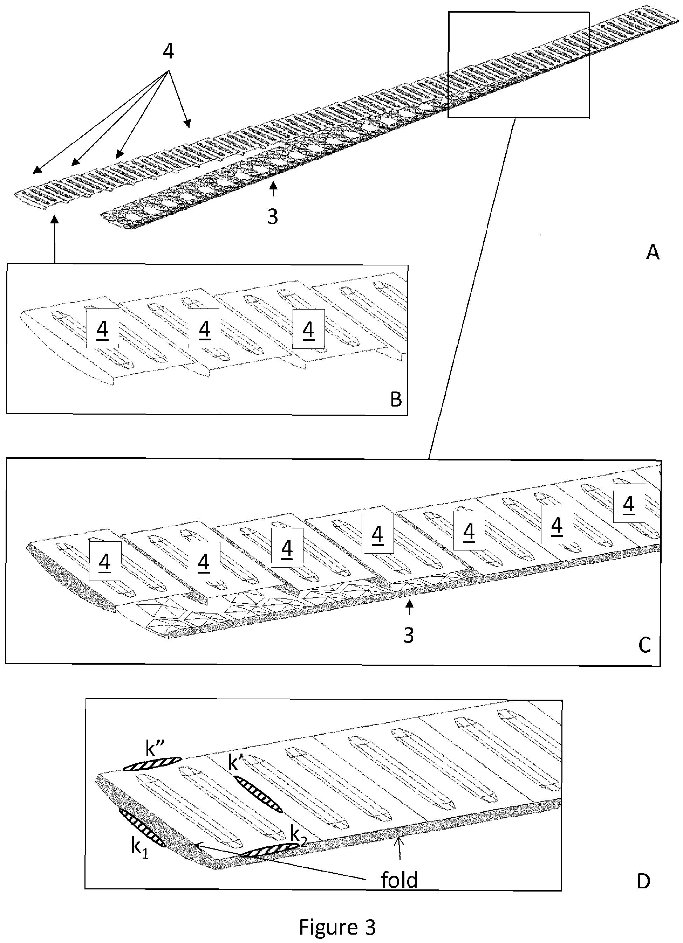

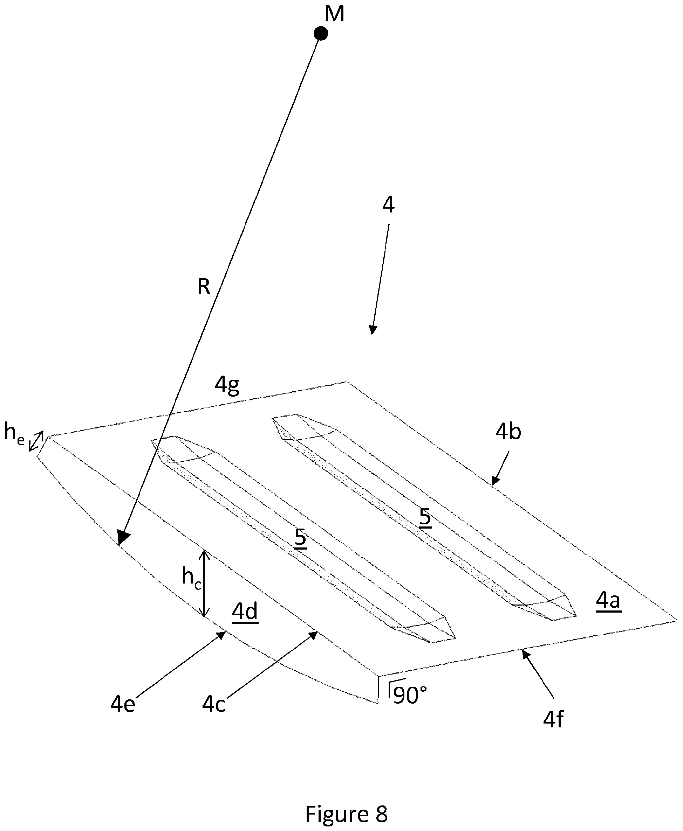

In a first embodiment the reinforcement against buckling are intruding or protruding reinforcements in the surface of the eosp. Intruding means that the dimples locally reduce the internal diameter of the tube segment and are therefore referred to as inwardly oriented dimples. Protruding means that the dimples locally increase reduce the internal diameter of the tube segment and are therefore referred to as outwardly oriented dimples. The imprints 5 in the isp of figure 3 and 8 are therefore protruding reinforcements as seen from a tube segment perspective. The dimples in the eosp are preferably intruding reinforcements. The deformation of the tube by the dimples and the shape of the dimpled surface increase the resistance against buckling compared to the undimpled eosp. The shape of the dimples is not particularly restrictive, but it is advantageous to provide the dimples in a regular pattern. This regularity provides the strip with a predictable behaviour, and the dimples can be applied by means of a technology like roll forming or pressing. The depth of the dimples can be tailored to the specific case. Deeper dimples will have a larger effect at the expense of processability during production of the dimples and the resulting tube segment. Deeper dimples will be more difficult to apply, and a strip with a deeper dimple will be more difficult to shape into a tube segment.

The dimples in the eosp are preferably produced during the same operation in which the curve is formed. The flange can also be applied in the same operation. The eosp has 1 or 2 flanges along its length and an imprint or dimples in the curved surface. The role of the imprint or dimples is to resist straightening of the curved shape. Thus it could be produced in a continuous or near continuous process like on a transfer press or roll forming or a combination of both.

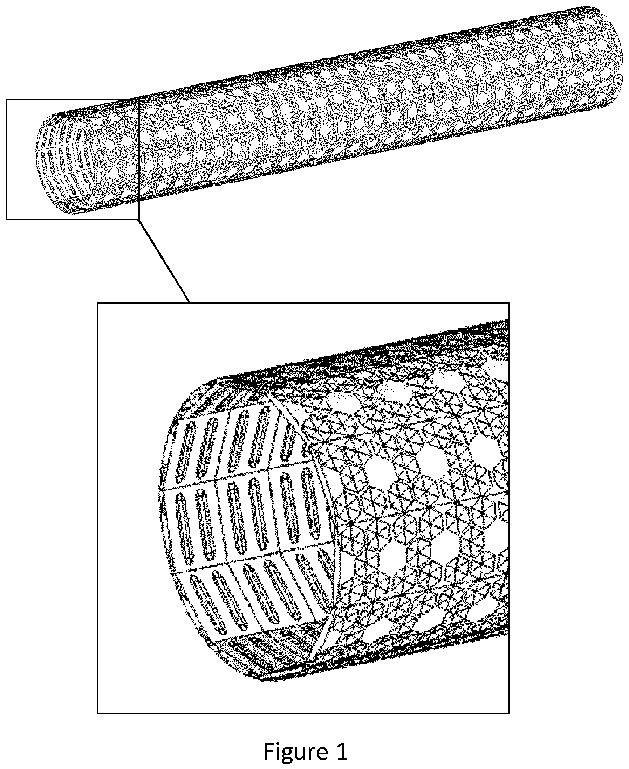

The inner skin panel is preferably folded such that the folded part forms the basis for the annular ribs. The flange is shaped such that its edge matches the curvature of the curved surface of the eosp. To make this folding easier, the inner skin needs to be relatively flat. Being relatively flat means that there is increased segment section, greater than the stringer depth, between the inner and outer skins at the mid span (see figure 8, where the height h_{c} at the centre of the flange is larger than the height hₑ at the edge). Being completely flat would make the inner skin panel weak in the out of plane direction. So imprints are also added to improve the buckling performance of the inner skin, but there may need to be some aerodynamic consideration for the pod passing through the tube. These inner skin panels would be suitable for high volume stamping. Both of these components, have very high levels of material utilisation. In the example of figure 1 hₑ = 70 mm, which is the same as the height of the flange 3d of the eosp, and and h_{c} is 160 mm. The values are not limiting values and can be chosen differently depending on the amount of dwts's making up the tube segment and depending on the requirements imposed on the tube segment, which again depend on the specific application. It is however well within the scope of the skilled person to determine the optimum values for any specific application.

Limiting the material selection to more or less widely available rolled strip steel means that the design has a minimum gauge of 2 mm and a maximum sheet width of about 1.6 m.

The minimum number of segments is limited by the rolled steel strip width and must allow for the stringer depth. More segments generate more welding, but the additional stringers may contribute to tube vertical stiffness and reduces the cell size. The cell size between ribs and stringers will have an influence on the local buckling modes, along with any skin stiffening from the imprints. The global mode is likely to be influenced by the stringer height, and the rib spacing. If it were deemed worthwhile, 2 or more different length inner panels could be made. Longer ones located at the ends of the tube, short enough to limit local buckling modes and shorter ones to provide more ribs and hence more global mode support in the middle portion of the tube. Different length inner panels would have to fit in with the outer skin imprints i.e. where the ribs meet the outer skin. It is clear that the more different isp sizes are used, the logistics of the process deteriorate.

The tube in the example has 11 dwts's, which as a prime number means that for global modes there is no repeat divisible pattern mode shape possible. So a 2, 3 or 4 lobe radial pattern would flex different parts of the segments and would not be able to exploit any weak section.

Even with only a 4 mm outer skin, a 1.6 m wide by 30 m long sheet weighs about 1.5 tonnes. It is likely even with tube curvature and a flange (the stringer to be), the eosp will not be dimensionally stable under its own weight. Welding the inner panels to it will greatly increase the rigidity of the dwts and allow easier handling. It is envisaged that dwts would be assembled first, then dwts assembled into a complete tube segment. Because of the modular nature dwts, different ones could be used where required. For example, the lowest dwts could constitute a floor for emergency escape, or for access during the Hyperloop assembly. As a floor there may be a need for only a light imprint to the inner panels, or no imprint requiring a thicker gauge, or a non-slip checker plate type pattern. It may be easier to install access and escape hatches to the sections before they are assembled. Extensions to the stringers could be used to mount accessories such as the pod guide rails in an ETT-system.

Welding dwts's together would mean making long straight welds which could be automated and possibly completed at the point of assembly. This gives the opportunity to transport individual or multiple dwts's stacked, potentially reducing the width or weight of transporting a complete tube. It may also permit transport in sections through the partially built tube.

The imprint pattern on the external and internal skin is not critical, potentially multiple patterns would suffice. The patterns shown generate a sufficient local buckling mode uplift for the geometry and gauges used and achieve the desired buckling target. For the eosp, the requirement for the imprint is to generate stiffness or section normal to the surface and ideally be such that it is not possible to cut the skin with a plane and create only an arc. Interlaced circular dents are useable, but the hexagonal shapes interlock better. For the inner panels the imprint of one or more elongated protruding reinforcements parallel to the flanged edge of the isp help stiffen in a direction between the stringers which is a longer span and hence weaker than between the ribs.

The steel strip may be as-hot-rolled, optionally galvanized and/or organically coated, or cold-rolled, annealed and optionally galvanized and/or organically coated. The as-rolled or as-coated steel strip is usually provided in the form of a coiled steel strip. If the dwts is produced on site using a mobile production facility for producing the eosp's and isp's directly from coiled strip, and subsequently assembling the dwts and tube segment on site also solves the transport problem solved, because transporting coils is not a problem.

In an embodiment the dimples in the tube segment and the resulting tube are circular, elliptic or polygonal wherein the number of sides in the polygon is 5 or more. The circular dimples are comparable in shape (not in size) with the dimples in a golf ball. It may be advantageous to use elliptic dimples, wherein a long and a short axis is present in the dimple (in a circular dimple the axes are equal). The dimples may all be oriented in the same direction, or there may be dimples that are oriented differently (cf treadplate).

The dimples may also have a shape that is polygonal wherein the number of sides in the polygon is 5 or more. The shape of the polygonal may be approximate because the edges of the polygonal may be smoothened to avoid sharp indentations which may act as stress concentrators. So, in case of a regular hexagonal dimple, the angle between two edges is 60°, but the transition from one edge to the adjacent edge may be performed according to a radius of curvature to smoothen the transition. In this context the "radius of curvature" means the approximate extent of the rounding as distinct from a precise geometrical form.

In a preferable embodiment the dimples have a hexagonal shape.

The tube segment according to the invention is suitable for constructing an evacuated tube transport system. However, the specific properties of the tube segment, and in particular its ability to perform under conditions wherein the pressure exerted on it from outside the tube produced from these tube segments is significantly higher than the pressure in the tube make it also suitable for the application of tubes operating under similar pressure conditions. Examples of these applications are underground or underwater tunnels for traffic such as bicycle tunnels, car tunnels, train tunnels, maintenance tunnels or shafts, tubes in hydro-electric power stations, gas storage systems in which underpressure occurs or may occur, etc.

### Brief description of the drawings

The invention will now be further explained by means of the following, non-limitative drawings.
Figure 1 shows a double-walled tube segment according to the invention. The tube segment shows embossed hexagonal dimples (indentation) to increase the buckling resistance of the tube when operated under external pressure. The tube segment in this example is constructed from eleven double-walled tube sections (dwts) according to the invention. The outside of the tube segment is formed by a plurality (11 in this example) of elongated outer skin panels (eosp) that have a curvature so as to form a smooth and cylindrical surface. The inside surface (as seen from the tube segment) consists of inner sheel parts (isp). The cross section in figure 1 is circular, and this is also the preferable shape. It is conceivable that the cross section may be non-circular, e.g. oval, but in that case the curvature of the eosp is not the same for each one making up the circumference of the tube segment, and this is not preferable from a process efficiency point of view. However, it may be applicable e.g. to house switches. The eosp's are joined together, e.g. by welding (such as laser welding, laser hybrid welding, gas metal arc welding, or any other suitable form of welding) along the entire length to obtain an airtight connection. The number of double-walled tube sections needed to produce a tube segment depends on the width of the available metal sheet and the desired diameter of the tube segment. It is preferable to produce the eosp from coiled steel sheet. In that case the width of the eosp is determined by the width of the coil. Assuming a width of 1.50 m and 4 mm thick steel strip and a 6 cm high folded portion a tube segment with an external diameter of 5 m requires 11 eosp's. A 4 m diameter tube segment requires 9 eosp's.
Figure 2 shows the double-walled tube segment according to the invention of figure 1 but without the flat central portion of the isp's and without the curved portion of the eosp, so that the internal structure is clearly visible. The cell size (the rectangular space between the annular ribs and the longitudinal ribs (stringers)) is visible, particularly in the enlarged section. The folded edge portions of the isp's are aligned to form a continuous circumferential rib. The height of the rib is not constant, because of the flat central portion of the isp's providing an even deeper twin wall section away from the stringers, but nevertheless it contributes greatly to the buckling strength. The distance between the ribs is determined by the width (4f, 4g) of the flat central portion of the isp's. Ideally (but not necessarily) the width of the isp is the width of the coiled steel sheet. Producing these isp's from hot rolled strip appears to be a very economical and efficient way of producing these parts because the strip is supplied in the form of coiled strip that can be uncoiled on site and the parts can be cut, provided with protruding or intruding reinforcements against buckling and folded in line. In this particular example the length of the eosp is 30 m, and the width (4f, 4g) of the flat central portion of the isp is 1 m. The eosp's are joined together, along the entire length so the flange along the long edge(s) of the eosp act as longitudinal ribs (or stringers). The eleven longitudinal ribs are clearly visible in figure 2.

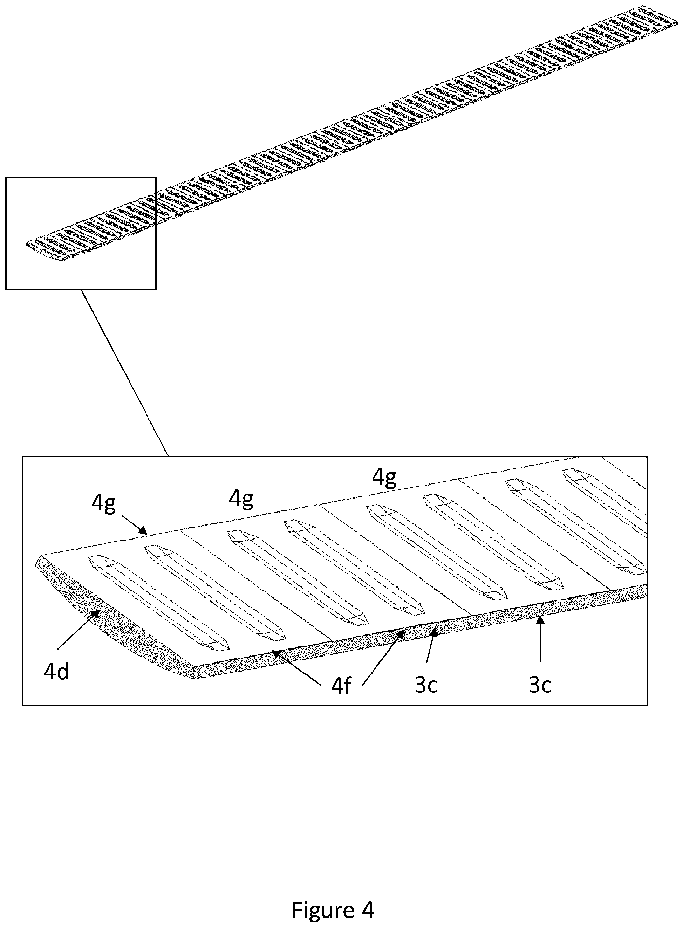

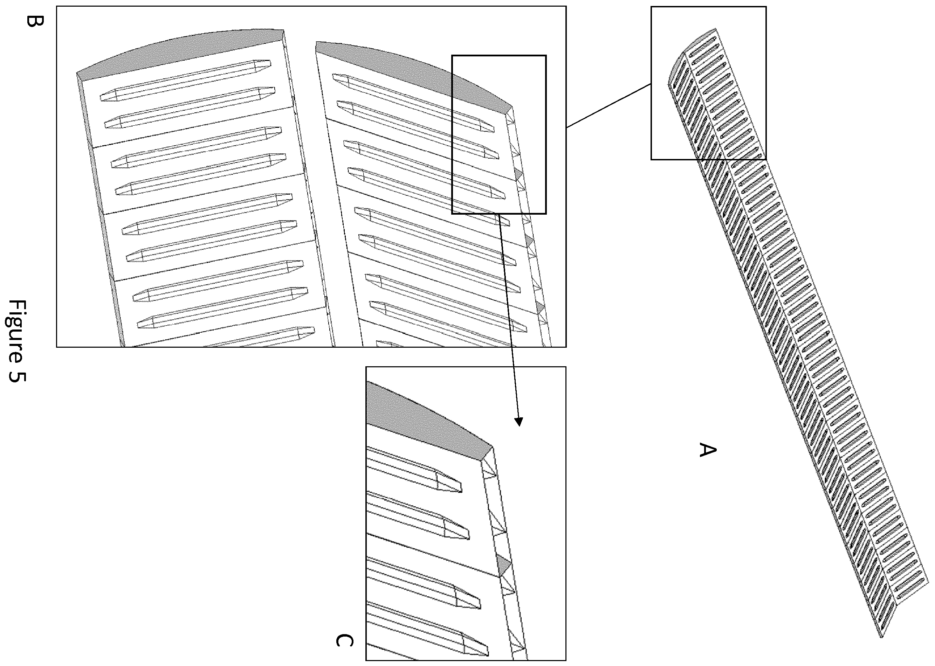

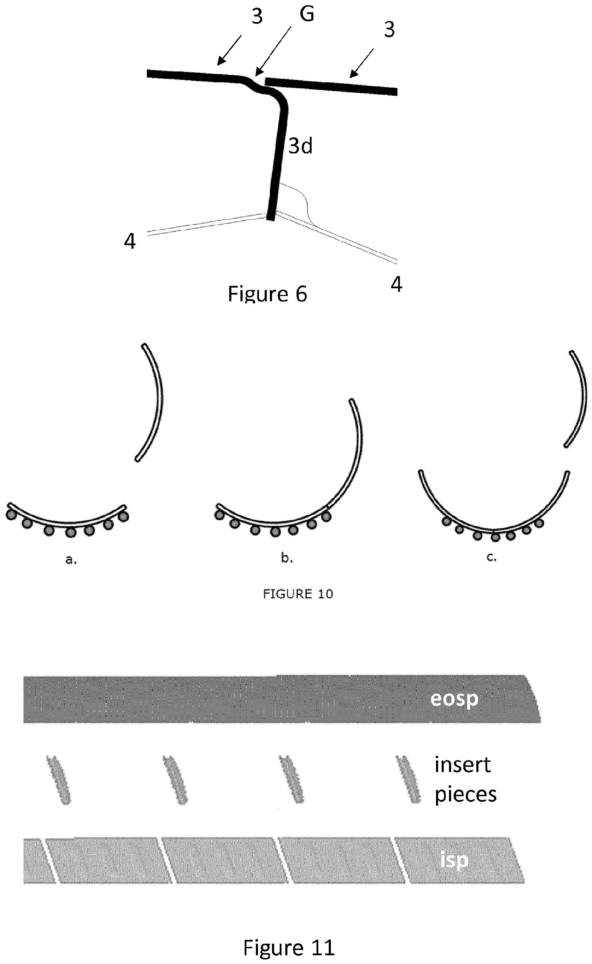

Figure 3 shows one eosp 3 and thirty individual isp's 4 of which the first seven are already welded to the eosp and the others are shown in an exploded view. These will be welded to the eosp finally resulting in the assembled double-walled tube section 2. In this example the thickness of the eosp is 4 mm and the thickness of the isp's is 2 mm. By itself the eosp is insufficiently stiff to be handled, despite the curvature, but in the form depicted in figure 4 where the isp's are welded to each other and to the eosp the assembly is stiff enough to be handled for transportation, e.g. by truck, or during constructed of a tube, through the tube already constructed. During construction, the system as depicted in figure 9 could be used. Figure 5A shows two dwts's joined airtightly. The eosp may be provided with a groove G to receive the edge of the adjoining eosp to enable the resulting outer surface of the double-walled and airtight tube segment to be flush and smooth after connecting the edge to the adjoining eosp (see figure 6). In the enlarged section (figure 5B) the two dwts are still separated so that the internal structure is visible. The second enlargement (figure 5C) shows that the eosp in this case has only one flange, so that the structure on the other long side is open. In addition to the airtight connection between the adjoining eosp's, it is preferable that the adjoining dwts's are also connected, preferably airtightly, at the side which forms the inside of the tube section along the edges 4f and 4g of the isp's in the dwts's.
Figure 3D also shows the locations where a connection (k, k') needs to be made between the isp's and the eosp, and where a fold is already present (fold). The connection indicated with k₁ or k₂ is preferably a full joint, such as a welding k₁ along the entire length of the edge 4e is the isp connecting the isp to the eosp, and the welding k₂ along the entire length of the edge 4f to connect the isp to the flange 3d of the eosp, but could also be stitch welded. The connections k' can also be full connections, but could also be spot welds, stitch welds or glued connections. The connection k" can be the same as k₂ if the eosp also has a flange similar to 3d at edge 3b, or a connection between two dwts on the inside of the tube segment. This can be a full joint, such as a weld along the entire length of the dwts or a different type of joint, optionally using a connector such as a corner bracket that is fixed in place. Note that the joint at the short upstanding edges of flange 4d are not indicated. These may or may not be joined.
Figure 6 shows a cross-section of the connection between two dwts, where the surface of the left eosp is indented to receive the edge of the right eosp and thereby produce a flush connection by welding in the groove G.

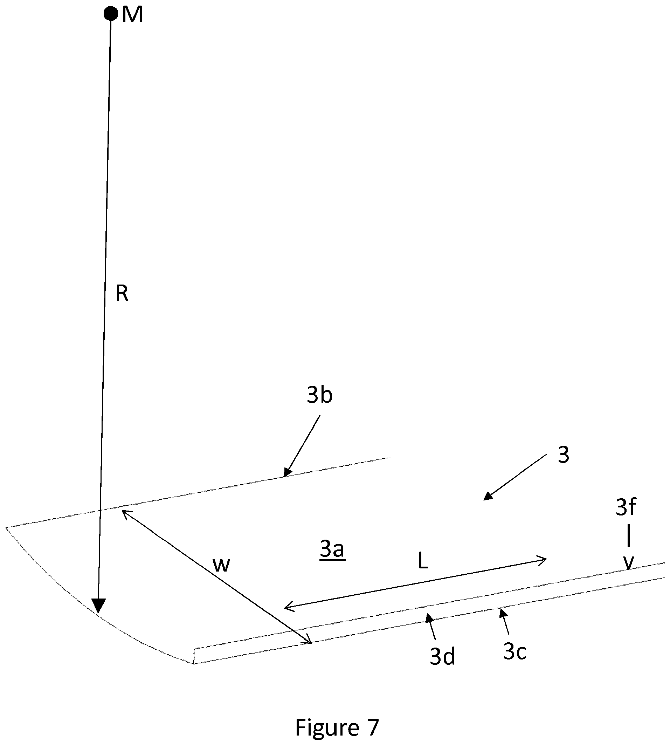

Figure 7 shows the eosp with the curvature R, and figure 8 shows the isp with the same curvature of edge 4e on flange 4d.
It should be noted that the dimensions of the edges 4b/4c and 4f/4g in the isp depicted in figure 8 is such that edge 4b/4c is shorter than edge 4f/4g. However, according to the invention the edge 4b/4c can also be chosen longer than edge 4f/4g. In that case the ribs formed by the flanges 4d are distanced further apart, and the amount of welding is reduced, because there are less isp's needed along the length of the dwts.
Figure 9 shows the sequence of producing a tube 6 from tube segments 1, and from double walled tube sections (dwts) 2. In this example 11 dwts's are needed to produce one tube segment 1.
Figure 10 shows a schematic process of producing double-walled and airtight tube segments from double-walled tube sections. A first dwts is placed on a roller bed. A second dwts is provided, and fixedly connected to the first dwts. After fixing the two dwts's the connected dwts's rotate on the roller bed. Another dwts is provided, and fixedly connected to the already connected dwts's and this is repeated until the double-walled tube segment is complete.
Figure 11 shows the embodiment wherein the dwts is produced by using the eosp according to the invention and a flat isp (optionally with reinforcements against buckling) without flanges and insert pieces that act as the connection between the curved surface of the eosp and the flat isp, wherein the insert pieces provide the annular rib in the tube segment produced from the dwts's.

## Claims

1. Double-walled tube section (2) for constructing a double-walled tube segment (1) suitable for underpressure applications **characterised in that** the double-walled tube segment comprises an elongated curved outer shell part (3) forming the outer wall of the double-walled tube segment and a plurality of inner shell parts (4), wherein the elongated curved outer shell part comprises a curved central portion (3a) and a folded portion (3d) at least one of the long edges (3b, 3c) wherein the folded portion forms a flange folded towards the centrepoint M of the curvature, wherein each inner shell part comprises a flat central portion (4a) having long edges and short edges, and a folded portion (4d) folded away from the centrepoint of the curvature at at least one of the long edges (4b, 4c), the folded portion having a curved edge (4e) to match the curvature of the elongated curved outer shell part, wherein the plurality of inner shell parts are joined together along their long edges (4b, 4c), and wherein the plurality of inner shell parts are joined to the inner surface of the elongated curved outer shell part along the curved edge (4e) of the folded edge portion (4d).

2. Double-walled tube section (2) according to claim 1, wherein the angle between the flat central portion (4a) and the folded edge portion (4d) is between 85 and 95°.

3. Double-walled tube section (2) according to claim 2, wherein the angle between the flat central portion (4a) and the folded edge portion (4d) is 90° (orthogonal).

4. Double-walled tube section (2) according to claim 1, wherein each inner shell part is also joined along at least one of the edges (4f, 4g) of the flat central portion (4a) to the edge (3f) of the at least one folded portion (3d) of the elongated curved outer shell part.

5. Double-walled tube section (2) according to claim 4, wherein each inner shell part is also joined along the short side edges (4e) to the elongated curved outer shell part (3).

6. Double-walled tube section (2) according to claim 1, wherein the edge (4b) of the flat central portion (4a) overlaps edge (4c) of the flat central portion (4a) of the adjoining inner shell part, and wherein these edges are joined.

7. Double-walled tube section (2) according to claim 1, wherein the elongated curved outer shell part is provided with a folded portion (3d, 3e) at both of the long edges (3b, 3c) wherein the folded portions forms flanges folded towards the centrepoint M of the curvature, and wherein each inner shell part is also joined along both of its short edges (4f, 4g) to the edge of the folded portions (3d, 3e) of the elongated curved outer shell part.

8. Double-walled tube section (2) according to claim 1, wherein the curved portion of the elongated curved outer shell part is provided with protruding or intruding reinforcements against buckling.

9. Double-walled tube section (2) according to claim 4-8_wherein the reinforcements against buckling are intruding dimples in the surface of the tube, preferably wherein the dimples are circular, elliptic or polygonal wherein the number of sides in the polygon is 5 or more.

10. Double-walled tube section (2) according to claim 1, wherein the flat portion of one, more or all of the inner shell parts is provided with protruding or intruding reinforcements (5) against buckling.

11. Double-walled tube section (2) according to claim 10, wherein the protruding reinforcements against buckling comprise one or more longitudinal dimples (5) parallel to the long edges (4b, 4c).

12. Double-walled and airtight tube segment (1) consisting of a plurality of double-walled tube sections (2) according to any one of the claims 1 to 9 wherein the double-walled tube sections are airtightly joined along the long edges (3b, 3c) to form a tube segment wherein the folded edges of the inner shell part in adjoining double-walled tube sections (2) are aligned so as to form a plurality of ribs around the internal circumference of the tube segment distanced apart, and wherein the folded portions of the elongated curved outer shell part form longitudinal rims ("stringers").

13. Double-walled and airtight tube segment (1) according to claim 12, wherein the double-walled tube sections are also joined to the adjoining double-walled tube section along the edges 4f and 4g of the adjoining isp's.

14. Double-walled and airtight tube segment (1) according to claim 12 with an incircle having a diameter of at least 3 m.

15. Tube for an evacuated tube transport system (ETT) comprising a plurality of double-walled tube segments according to any one of claim 12 to 14.

## Patentansprüche

1. Doppelwandiger Rohrabschnitt (2) zum Aufbau eines doppelwandigen Rohrsegments (1), das für Unterdruckanwendungen geeignet ist, **dadurch gekennzeichnet, dass** das doppelwandige Rohrsegment einen länglichen gekrümmten äußeren Schalenteil (3), der die Außenwand des doppelwandigen Rohrsegments bildet, und eine Vielzahl von inneren Schalenteilen (4) umfasst, wobei der längliche gekrümmte äußere Schalenteil einen gekrümmten Mittelbereich (3a) und einen gefalteten Bereich (3d) an zumindest einer der langen Kanten (3b, 3c) umfasst, wobei der gefaltete Bereich einen Flansch bildet, der zu dem Mittelpunkt M der Krümmung gefaltet ist, wobei jeder innere Schalenteil einen flachen Mittelbereich (4a) mit langen Kanten und kurzen Kanten und einen gefalteten Bereich (4d) umfasst, der von dem Mittelpunkt der Krümmung an zumindest einer der langen Kanten (4b, 4c) weg gefaltet ist, wobei der gefaltete Bereich eine gekrümmte Kante (4e) aufweist, um der Krümmung des länglichen gekrümmten äußeren Schalenteils zu entsprechen, wobei die Vielzahl von inneren Schalenteilen entlang ihrer langen Kanten (4b, 4c) miteinander verbunden ist, und wobei die Vielzahl von inneren Schalenteilen mit der Innenoberfläche des länglichen gekrümmten äußeren Schalenteils entlang der gekrümmten Kante (4e) des gefalteten Kantenbereichs (4d) verbunden ist.

2. Doppelwandiger Rohrabschnitt (2) nach Anspruch 1, wobei der Winkel zwischen dem flachen Mittelbereich (4a) und dem gefalteten Kantenbereich (4d) zwischen 85 und 95 ° ist.

3. Doppelwandiger Rohrabschnitt (2) nach Anspruch 2, wobei der Winkel zwischen dem flachen Mittelbereich (4a) und dem gefalteten Kantenbereich (4d) 90 ° (orthogonal) ist.

4. Doppelwandiger Rohrabschnitt (2) nach Anspruch 1, wobei jeder innere Schalenteil auch entlang zumindest einer der Kanten (4f, 4g) des flachen Mittelbereichs (4a) mit der Kante (3f) des zumindest einen gefalteten Bereichs (3d) des länglichen gekrümmten äußeren Schalenteils verbunden ist.

5. Doppelwandiger Rohrabschnitt (2) nach Anspruch 4, wobei jeder innere Schalenteil auch entlang der kurzen Seitenkanten (4e) mit dem länglichen gekrümmten äußeren Schalenteil (3) verbunden ist.

6. Doppelwandiger Rohrabschnitt (2) nach Anspruch 1, wobei die Kante (4b) des flachen Mittelbereichs (4a) Kante (4c) des flachen Mittelbereichs (4a) des angrenzenden inneren Schalenteils überlappt, und wobei diese Kanten verbunden sind.

7. Doppelwandiger Rohrabschnitt (2) nach Anspruch 1, wobei der längliche gekrümmte äußere Schalenteil mit einem gefalteten Bereich (3d, 3e) an beiden der langen Kanten (3b, 3c) bereitgestellt ist, wobei die gefalteten Bereiche Flansche bilden, die zu dem Mittelpunkt M der Krümmung gefaltet sind, und wobei jeder innere Schalenteil auch entlang beider seiner kurzen Kanten (4f, 4g) mit der Kante der gefalteten Bereiche (3d, 3e) des länglichen gekrümmten äußeren Schalenteils verbunden ist.

8. Doppelwandiger Rohrabschnitt (2) nach Anspruch 1, wobei der gekrümmte Bereich des länglichen gekrümmten äußeren Schalenteils mit vorstehenden oder eindringenden Verstärkungen gegen Knicken bereitgestellt ist.

9. Doppelwandiger Rohrabschnitt (2) nach Anspruch 8, wobei die Verstärkungen gegen Knicken in die Oberfläche des Rohres eindringende Vertiefungen sind, wobei bevorzugt die Vertiefungen kreisförmig, elliptisch oder polygonal sind, wobei die Anzahl an Seiten in dem Polygon 5 oder mehr ist.

10. Doppelwandiger Rohrabschnitt (2) nach Anspruch 1, wobei der flache Bereich von einem, mehreren oder allen der inneren Schalenteile mit vorstehenden oder eindringenden Verstärkungen (5) gegen Knicken bereitgestellt ist.

11. Doppelwandiger Rohrabschnitt (2) nach Anspruch 10, wobei die vorstehenden Verstärkungen gegen Knicken eine oder mehrere längliche Vertiefungen (5) parallel zu den langen Kanten (4b, 4c) umfassen.

12. Doppelwandiges und luftdichtes Rohrsegment (1), bestehend aus einer Vielzahl von doppelwandigen Rohrabschnitten (2) nach einem der Ansprüche 1 bis 9, wobei die doppelwandigen Rohrabschnitte entlang der langen Kanten (3b, 3c) luftdicht verbunden sind, um ein Rohrsegment zu bilden, wobei die gefalteten Kanten des inneren Schalenteils in angrenzenden doppelwandigen Rohrabschnitten (2) ausgerichtet sind, um eine Vielzahl von Rippen um den Innenumfang des Rohrsegments beabstandet zu bilden, und wobei die gefalteten Bereiche des länglichen gekrümmten äußeren Schalenteils Längsränder ("Stringer") bilden.

13. Doppelwandiges und luftdichtes Rohrsegment (1) nach Anspruch 12, wobei die doppelwandigen Rohrabschnitte auch mit dem angrenzenden doppelwandigen Rohrabschnitt entlang der Kanten 4f und 4g der angrenzenden inneren Schalenteile verbunden sind.

14. Doppelwandiges und luftdichtes Rohrsegment (1) nach Anspruch 12 mit einem Inkreis, der einen Durchmesser von zumindest 3 m aufweist.

15. Rohr für ein Vakuumrohrtransportsystem (ETT), umfassend eine Vielzahl von doppelwandigen Rohrsegmenten nach einem der Ansprüche 12 bis 14.

## Revendications

1. Section de tube à double paroi (2) destinée à la construction d'un segment de tube à double paroi (1) adapté pour des applications sous pression, **caractérisé en ce que** le segment de tube à double paroi comprend une partie d'enveloppe externe courbée allongée (3) formant la paroi externe du segment de tube à double paroi et une pluralité de parties d'enveloppes internes (4), ladite partie d'enveloppe externe courbée allongée comprenant une portion centrale courbée (3a) et une portion pliée (3d) au moins l'un des bords longs (3b, 3c), ladite portion pliée formant une rebord plié vers le point central M de la courbure, chaque partie d'enveloppe interne comprenant une portion centrale plate (4a) comportant des bords longs et des bords courts, et une portion pliée (4d) pliée
au loin du point central de la courbure au niveau d'au moins l'un des bords longs (4b, 4c), la portion pliée comportant un bord courbé (4e) pour correspondre à la courbure de la partie d'enveloppe externe courbée allongée, ladite pluralité de parties d'enveloppes internes étant jointes ensemble le long de leurs bords longs (4b, 4c), et ladite pluralité de parties d'enveloppes internes étant jointes à la surface interne de la partie d'enveloppe externe courbée allongée le long du bord courbé (4e) de la portion de bord pliée (4d).

2. Section de tube à double paroi (2) selon la revendication 1, ledit angle entre la portion centrale plate (4a) et la portion de bord pliée (4d) étant compris entre 85 et 95°.

3. Section de tube à double paroi (2) selon la revendication 2, ledit angle entre la portion centrale plate (4a) et la portion de bord pliée (4d) étant à 90° (orthogonal).

4. Section de tube à double paroi (2) selon la revendication 1, chaque partie d'enveloppe interne étant également jointe le long d'au moins l'un des bords (4f, 4g) de la portion centrale plate (4a) au bord (3f) de la au moins une portion pliée (3d) de la partie d'enveloppe externe courbée allongée.

5. Section de tube à double paroi (2) selon la revendication 4, chaque partie d'enveloppe interne étant également j ointe le long des bords latéraux courts (4e) à la partie d'enveloppe externe courbée allongée (3).

6. Section de tube à double paroi (2) selon la revendication 1, ledit bord (4b) de la portion centrale plate (4a) chevauchant le bord (4c) de la portion centrale plate (4a) de la partie d'enveloppe interne adjacente, et ces bords étant joints.

7. Section de tube à double paroi (2) selon la revendication 1, ladite partie d'enveloppe externe courbée allongée étant dotée d'une portion pliée (3d, 3e) au niveau de deux des bords longs (3b, 3c) lesdites portions pliées formant des rebords pliés vers le point central M de la courbure, et chaque partie d'enveloppe interne étant également jointe le long de deux de ses bords courts (4f, 4g) au bord des portions pliées (3d, 3e) de la partie d'enveloppe externe courbée allongée.

8. Section de tube à double paroi (2) selon la revendication 1, ladite portion courbée de la partie d'enveloppe externe courbée allongée étant dotée de renforts saillants ou intrusifs contre le flambage.

9. Section de tube à double paroi (2) selon la revendication 8, lesdits renforts contre le flambage étant des dépressions intrusives dans la surface du tube, de préférence lesdites dépression étant circulaires, elliptiques ou polygonales, le nombre de côtés dans le polygone étant supérieur ou égal à 5.

10. Section de tube à double paroi (2) selon la revendication 1, ladite portion plate d'une, de plusieurs ou de toutes les parties d'enveloppes internes étant dotée de renforts saillants ou intrusifs (5) contre le flambage.

11. Section de tube à double paroi (2) selon la revendication 10, lesdits renforts saillants contre le flambage comprenant une ou plusieurs dépressions longitudinales (5) parallèles aux bords longs (4b, 4c).

12. Segment de tube à double paroi et étanche à l'air (1) constitué d'une pluralité de sections de tube à double paroi (2) selon l'une quelconque des revendications 1 à 9, lesdites sections de tube à double paroi étant joints de manière étanche à l'air le long des bords longs (3b, 3c) pour former un segment de tube, lesdits bords pliés de la partie d'enveloppe interne dans les sections de tube à double paroi adjacentes (2) étant alignés de façon à former une pluralité de nervures autour de la circonférence intérieure du segment de tube éloignées les unes des autres, et lesdites portions pliées de la partie d'enveloppe externe courbée allongée formant des bordures longitudinales (« longerons »).

13. Segment de tube à double paroi et étanche à l'air (1) selon la revendication 12, lesdites sections de tube à double paroi étant également jointes à la section de tube à double paroi adjacente le long des bords 4f et 4g des isp adjacents.

14. Segment de tube à double paroi et étanche à l'air (1) selon la revendication 12 avec un cercle inscrit comportant un diamètre supérieur ou égal à 3 m.

15. Tube pour un système de transport par tube sous vide (ETT) comprenant une pluralité de segments de tube à double paroi selon l'une quelconque des revendications 12 à 14.
